# EUROPEAN PATENT SPECIFICATION

(11) **EP 1 230 851 B1**
(45) Date of publication and mention of the grant of the patent: **14.09.2005**
(21) Application number: 02075400.8
(22) Date of filing: 01.02.2002
(51) Int. Cl.: A01K 29/00, A01K 1/12

(54) **A device for performing a treatment on a dairy animal**
Vorrichtung zur Behandlung eines Milchtieres
Dispositif pour effectuer un traitement sur un animal laitier

(30) Priority: 13.02.2001 NL 1017352
(43) Date of publication of application: 14.08.2002
(60) Divisional application: 05075704.6
(73) Proprietor: Lely Enterprises AG, 6300 ZUG (CH)
(72) Inventor: Van der Lely, Alexander, 3065 NA Rotterdam (NL); van den Berg, Karel, 2971 BR Bleskensgraaf (NL); Seerden, Adrianus Maria, 2231 BW Rijnsburg (NL); Meijer, Eduard Lodewijk, 2514 HL Den Haag (NL); Fransen, Renatus Ignatius Josephus, 3135 ZD Vlaardingen (NL)
(74) Representative: Corten, Maurice Jean F.M.

(56) References cited:
- EP-A- 0 988 786
- WO-A-00/13393
- WO-A-01/10197
- WO-A-99/01026
- NL-C- 1 000 883
- US-A- 5 878 692

## Description

The invention relates to a device for performing a treatment on a dairy animal according to the preamble of claim 1.

Such a device, for example a milking robot, is known from WO-A-0110197. Although such a milking robot functions satisfactorily, there appear to be strong differences in the milk yield of different dairy animals.

It is an object of the invention to provide a device for performing a treatment on an animal, by means of which device on the one hand the result of the treatment is optimised and on the other hand the well-being of an animal is promoted.

For that purpose the invention provides a device for performing a treatment on a dairy animal, in particular a cow comprising the characterizing features of claim 1. The invention is based on the insight that the problem is not exclusively caused by the device that performs the treatment, but also, and in some cases even substantially, by the degree of stress of the animal. By measuring according to the invention the stress of an animal and adapting the connection of the teat cups in dependence thereof, it is not only possible to obtain an optimum result for the connection, but also to promote the well-being of an animal.

From WO 99 01026 it is known per se to break off the animal related treatment when abnormal behaviour is established. Breaking off an animal related treatment may have harmful effects on the animal, and moreover the cause of the abnormal behaviour is not obviated. According to the invention the animal related treatment does continue, but is performed in another manner.

From EP-A-988786 it is known per se to influence the stress of animals by means of an apparatus, e.g. by cooling or supplying fodder.

The device is preferably provided with an animal identification system.

Although the data per stress measuring device can be processed separately, for obtaining an accurate indication the device is preferably provided with a central unit comprising a computer having a memory for processing measurement data measured by the stress measuring device. This enables to combine in a simple manner different parameters for obtaining a stress indication. Said central unit is in particular provided with a reading device for reading the stress measuring device.

When the central unit comprises a correspondence table, said correspondence table containing per animal stress related data, such as limit values, historical data and tolerance ranges, there can not only be given an indication of the momentarily measured value of a stress parameter, but there can also be obtained an indication whether the momentarily measured value leads to special action of e.g. the farmer. For that purpose in particular the central unit is provided with a comparing device for comparing the measurement data with the data in the correspondence table. The computer is preferably loaded with a program for giving, on the basis of the comparison of the comparing device, an indication about the amount of stress of the animal. The stress related data in the correspondence table are preferably updated automatically.

The parameters giving an indication of stress varying per animal, it is advantageous when the device is provided with various stress measuring devices, the computer containing an algorithm for attributing a weighing factor to a particular stress measurement data.

For the purpose of displaying the processed data, the central unit is provided with a signal issuing device for issuing a signal after receipt and processing of the stress measurement data. The signal preferably produces an image on a display screen, printer or the like giving information about the stress behaviour of the animal.

When the device according to the invention comprises a gate for entrance to, respectively exit from a treatment area, said gate being adapted to be brought into various positions, the functioning of the gate being controlled by the control signal, in dependence of the control signal the animal can be guided via said gate to a certain area. If desired, the gate is adapted not to admit the animal to the treatment area when the stress condition of the animal does not allow this.

When the device comprises a calming device, said calming device being controlled by the control signal, the calming device can make an attempt to calm the animal. As a (non-limiting) example, a loudspeaker reproducing calming music, or a rubbing brush respectively a massaging brush may be taken into account.

It has appeared that for the determination of stress of an animal, per animal different parameters provide a stronger indication of the stress. Out of all possible parameters that can be measured on an animal the following have proved extremely suitable. The parameters are summed up in connection with the device for determining them:
an infrared meter for measuring an infrared image of the animal;
a camera, in particular a video camera, for determining the position of the ears and/or the head and/or the tail of the animal;
a hygrometer for determining the humidity of the fur respectively the nose of the animal;
a movement behaviour meter, such as a video camera, a step counter, for determining the movement behaviour, in particular the movement activity, of the animal;
an eye meter, such as a video camera or iris scanner, for determining the eye characteristics of the animal;
a smell meter or odour meter for determining the breath or body odour of the animal;
a muscular tension measuring device, such as a muscle contraction meter or video camera, for determining the muscular tension of the animal;
a video camera for determining whether the animal has its tongue outside its mouth;
a blood analyser for determining the concentration of blood components, such as oxygen, hormones, blood cells, of the animal;
an excrement analysing device for determining the characteristics of the excrement of the animal;
a heartbeat meter for determining the heartbeat of the animal;
a thermometer for determining the temperature of the animal;
a muscle vibration meter for determining the muscle vibrations of the animal.

For the purpose of facilitating the data transmission the stress measuring device is provided with a buffer memory for containing a number of measurement data. As a result thereof the measurement data have not to be transmitted or read continuously. For that purpose the stress measuring device is preferably provided with a transmitter for transmitting data. The stress measuring device is preferably provided with a receiver for receiving a transmission order, so that energy can be saved and the stress measuring device can be driven for a long time on e.g. batteries.

The device comprises an animal identification system known per se. Such an animal identification system provides the possibility of collecting the measurement data per animal, comparing them and issuing a desired control signal per animal.

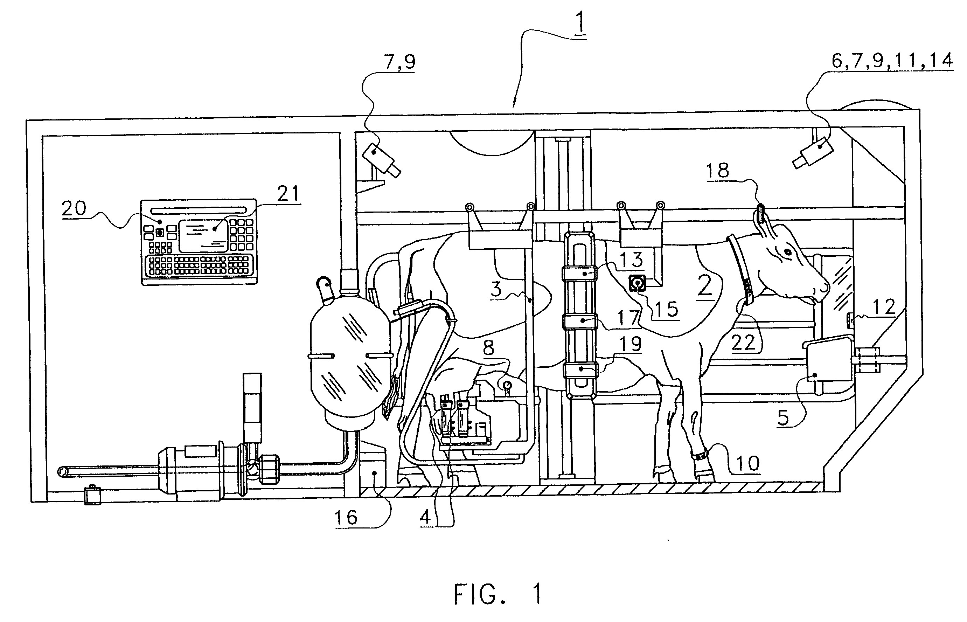

The invention will now be explained in further detail with reference to the accompanying Figure 1 showing a side view of an embodiment according to the invention.

Before going more deeply into a description of the embodiment of the invention, first the basis of the invention will be described briefly. Stress may manifest itself by various behavioural reactions, possibly in combination with physiological reactions. In particular on the basis of the specific combination of such reactions, a stress reaction can be distinguished from a physical adaptation to a changing environment. In other words, there does not exist one parameter for univocally indicating stress, although one parameter appears to provide a stronger indication of the degree of stress than another parameter. Per animal there appears to be a particular parameter, or a limited number of parameters, which with regard to the determination of stress is/are more important than other parameters. Therefore, combining different parameters, in particular behavioural parameters and physiological parameters, provides an improved indication of the degree of stress of an animal.

The invention may be applied to all animals, but hereinafter the invention will be explained in a non-limiting way with reference to dairy cows 2, as shown in Figure 1. When dairy cows 2 are nervous or stressed, for example during milking, they appear to behave restlessly, for example accentuated by frequent movements of the body, stepping or kicking with one of the hind legs. Additionally important physiological systems appear to be activated, as a result of which inter alia the production of hormones, the heart beat rate, plasma concentrations of the blood are influenced.

The increased production of adrenaline before and during milking is highly undesirable, as adrenaline influences the concentration of oxytocin that stimulates the milk yield.

Behaviour (stepping; kicking; position of head, tail, ears); heart beat; blood samples inter alia for analysis of oxytocin, cortisol, adrenaline, noradrenaline, percentage of oxygen, content of blood cells and the like, are constantly (i.e. regularly or continuously) measured. In particular these parameters are measured before, during and after milking, and the data are in particular stored together with milk related parameters, such as preferably the milk flow per udder quarter of animals during milking. An animal identification 22 ensures that these data are stored per animal.

Heart beat can for example be measured by means of a band 17 with heart beat meter around the leg or the abdomen of the cow 2. Alternatively or additionally a heart beat meter known per se may be disposed on the cow 2 near a place where an artery is located, in this connection the udder, or an ear of the cow may be taken into consideration. A suitable heart monitoring system can for example be obtained with Polar Electro Oy, Helsinki, Finland. Alternatively a heart beat meter may be included in at least one of the teat cups 4.

Blood samples can be taken by suitable devices, comprising a syringe and analysing equipment 15, at places where a cow 2 regularly stays. There may for example be provided in a milking robot 3 a robot arm carrying a syringe taking automatically a blood sample during milking without the treatment of the cow 2 being hindered thereby.

The device according to the invention may for example also comprise the cleaning box, the foremilking box, the post-treatment box, or feeding parlours or the like.

In the shed, in particular in the waiting area in front of the milking parlour, and in the milking parlour 1, there is disposed a camera 6, 7, 9, 11, 14 for observing the cows 2. It will be obvious that a plurality of cameras may be used. The video images are analysed by movement recognition programs known per se for the purpose of determining parameters such as stepping; kicking; position of head, tail, ears, back curvature (indication of muscular tension); position of tongue; eye movements. To that end the image per cow 2 is compared with stored historical data regarding the cow 2.

Further the urine and excrement of the cows 2 are analysed (on a less frequent basis) by an excrement analysing device 16. In this connection manual taking of samples may also be taken into consideration.

There may further be provided a hygrometer 8, a step counter 10, a smell meter 12, a muscle contraction meter 13, a thermometer 18 and/or a muscle vibration meter 19.

It is noticed that besides a step counter other ways of determining the number of steps are possible as well. When for example a so-called weighing floor is provided in the milk box, on the basis of the speed variation of the measured values there can be obtained an indication about the number of steps. Quick variation in the weighing values are an indication of a more restless animal rather than almost no variation. Besides, with milking robots making use of a so-called cow follower, the nervousness or stress of a cow can be deduced from the movements the cow follower has to carry out.

All these measurement data are transmitted by the stress measuring devices to or read by a central unit 20 that is possibly connected with several reading devices disposed at several places in the shed. Said central unit 20 comprises a computer having a memory in which per cow 2 limit values and tolerance ranges in relation to the relevant parameters for stress behaviour are stored. The momentarily measured values are kept at least temporarily.

For analysing the stress related data, such as the number of steps, position of the head, binomial and Poisson distributions known per se, as well as logit and log transformations are applied by the computer, for causing the central unit 20 to issue a signal about the stress behaviour of the cow. This signal can give an indication of the stress behaviour on a display screen 21 or a printer. In particular the dispersion of the Poisson distribution is estimated by the Pearson chi-quadratic statistics. Furthermore, associations between different parameters are deduced from Spearman's rank-order correlation coefficient. By means thereof, or by means of comparable other operations, it is possible to deduce per cow 2 those parameters that are more relevant to the determination of stress behaviour than other parameters. Thus there can be attributed a weighing factor to particular parameters. Moreover, it is then possible to distinguish whether a cow 2 is keen on entering the milk box 1 or on the contrary is not so eager to be milked.

A comparison is possible when previously measured standard values are determined and inputted into the system. Furthermore, these standard values can continuously be updated on the basis of the measurements.

As described, Figure 1 shows a side view of a milk box 1 with a cow 2 present therein. The milk box 1 is provided with a milking robot 3 with teat cups 4 that can be connected automatically to the teats of the cow 2 with the aid of the milking robot 3. Near the front side of the milk box 1 there is further provided a feeding trough 5 to which concentrate can be supplied in metered portions. Other components of the milk box and milking robot are not shown in the drawing for the sake of clearness.

The invention further comprises that a cow related treatment, for example but not exclusively connecting the teat cups 4 to the teats of the cow 2, can be performed in various ways. In this respect connection at normal speed, connection at reduced speed, connection at increased speed, or no connection at all may be taken into account. To other cow related treatments, such as e.g. foremilking, precleaning, post-cleaning, stimulating, the same applies, these treatments can be performed in various ways according to the invention.

In dependence of the degree of stress of the cow 2, determined by the stress measuring device, a control signal is issued with the aid of which the suitable mode is chosen. When a cow 2 appears to have a stress level that is normal for her, then a control signal is issued resulting in selection of the normal connection speed. When the cow 2 appears to have positive stress, in other words is keen on entering the milking robot, then there is issued a control signal selecting the increased connection speed. When the stress measuring device displays a slightly increased degree of stress, there is issued a control signal selecting the reduced connection speed in order to prevent the cow from getting still more stressed.

When the degree of stress is so high that the teat cups cannot be applied without the cow running a risk, in dependence of the place where the cow is staying the following actions can be taken. If the cow is not yet present in the milk box, the entrance gate can be controlled by the control signal in such a manner that the cow does not go to the milk box but to another area where she may for example be calmed by means of music, fodder, or by the farmer after the latter has been called up by the control signal. If the cow is present in the milk box but the teat cups have not yet been connected, the teat cups will not be connected and attempts will be made to calm the cow, for example by means of fodder in the feeding trough or by playing music. If these attempts are not successful within a foreseeable, to be preset period of time, then the cow is allowed to leave the milk box, possibly to a calming area. If the teat cups have been connected but milking has not yet started, attempts can be made to calm the cow by means of fodder in the feeding trough or by playing music, but the teat cups remain connected. If milking has already started, either milking can be continued in an accelerated manner, or the vacuum level can be adapted, so that milking takes place in a more pleasant way for that cow. In the latter case milking is continued because otherwise there will be a risk of udder infection owing to the fact that the udder is not milked out. However, in the latter case the cow is put on an attention list, or the farmer is alerted in another manner, in order that at the next milking run said cow will be given special attention.

It will be obvious that in view of the large number of treatments to be performed, it is practically impossible to give a description of each treatment. Moreover, in dependence of the cows of a herd, the modes of the treatment are differently adjustable.

## Claims

1. A device for performing a treatment on a dairy animal, in particular a cow (2), said device comprising a milking robot (3) with teat cups (4) that can be connected automatically to the teats of the cow (2) with the aid of the milking robot (3), said the device being suitable for performing the treatment in various modes, said device being provided with a stress measuring device (6 through 19) for determining the degree of stress of the animal (2) and for issuing a control signal with a value depending on the stress measured, said mode of the treatment being selected with the aid of the control signal, **characterized in that** said milking robot (3) being suitable for performing the connection of the teat cups (4) to the teats of the cow (2) in various modes, and **in that** this mode of the treatment is selected with the aid of the control signal.

2. A device as claimed in claim 1, **characterized in that** the device is provided with an animal identification system (22).

3. A device as claimed in claim 1 or 2, **characterized in that** the device is provided with a central unit (20) comprising a computer having a memory for processing measurement data measured by the stress measuring device (6 through 19).

4. A device as claimed in claim 3, **characterized in that** the central unit (20) is provided with a reading device for reading the stress measuring device.

5. A device as claimed in claim 3 or 4, **characterized in that** the central unit (20) comprises a correspondence table, said correspondence table containing per animal stress related data, such as limit values, historical data and tolerance ranges.

6. A device as claimed in claim 5, **characterized in that** the stress related data in the correspondence table are updated automatically.

7. A device as claimed in claim 6, **characterized in that** the central unit (20) comprises a comparing device for comparing the measurement data with the data in the correspondence table.

8. A device as claimed in claim 7, **characterized in that** the device is provided with various stress measuring devices, the computer containing an algorithm for attributing a weighing factor to a particular stress measurement data.

9. A device as claimed in any one of the preceding claims 3 through 8, **characterized in that** the central unit (20) is provided with a signal issuing device for issuing the control signal after receipt and processing of the stress measurement data.

10. A device as claimed in any one of the preceding claims, **characterized in that** the device comprises a gate for entrance to, respectively exit from a treatment area, said gate being adapted to be brought into various positions, the functioning of the gate being controlled by the control signal.

11. A device as claimed in any one of the preceding claims, **characterized in that** the device comprises a calming device, said calming device being controlled by the control signal.

12. A device as claimed in any one of the preceding claims, **characterized in that** the stress measuring device comprises at least one measuring device selected from the group consisting of: an infrared meter (6) for measuring an infrared image of the animal; a camera, in particular a video camera (7), for determining the position of the ears and/or the head and/or the tail of the animal; a hygrometer (8) for determining the humidity of the fur respectively the nose of the animal; a movement behaviour meter, such as a video camera (9), a step counter (10), for determining the movement behaviour, in particular the movement activity, of the animal; an eye meter (11), such as a video camera or scanner, for determining the eye characteristics of the animal; a smell meter or odour meter (12) for determining the breath or body odour of the animal; a muscular tension measuring device (13), such as a muscle contraction meter or video camera, for determining the muscular tension of the animal; a video camera (14) for determining whether the animal has its tongue outside its mouth; a blood analyser (15) for determining the concentration of blood components, such as oxygen, hormones, blood cells, of the animal; an excrement analysing device (16) for determining the characteristics of the excrement of the animal; a heartbeat meter (17) for determining the heartbeat of the animal; a thermometer (18) for determining the temperature of the animal; a muscle vibration meter (19) for determining the muscle vibrations of the animal.

13. A device as claimed in any one of the preceding claims, **characterized in that** the stress measuring device (6 through 19) is provided with a buffer memory for containing a number of measurement data.

14. A device as claimed in any one of the preceding claims, **characterized in that** the stress measuring device (6 through 19) is provided with a transmitter for transmitting data.

15. A device as claimed in claim 14, **characterized in that** the stress measuring device (6 through 19) is provided with a receiver for receiving a transmission order.

## Patentansprüche

1. Vorrichtung zum Durchführen einer Behandlung an einem milchgebenden Tier, insbesondere einer Kuh (2), wobei die Vorrichtung einen Melkroboter (3) mit Zitzenbechern (4) umfaßt, die mit Hilfe des Melkroboters (3) automatisch an die Zitzen der Kuh (2) angeschlossen werden können, wobei die Vorrichtung geeignet ist, die Behandlung auf verschiedene Arten durchzuführen, wobei die Vorrichtung mit einer Belastungsmeßvorrichtung (6 bis 19) versehen ist, um den Grad der Belastung des Tieres (2) zu ermitteln und ein Steuersignal mit einem von der gemessenen Belastung abhängigen Wert auszugeben, wobei die Art der Behandlung mit Hilfe des Steuersignals gewählt wird,
**dadurch gekennzeichnet, daß** der Melkroboter (3) geeignet ist, den Anschluß der Zitzenbecher (4) an die Zitzen der Kuh (2) auf verschiedene Arten durchzuführen, und daß diese Art der Behandlung mit Hilfe des Steuersignals gewählt wird.

2. Vorrichtung nach Anspruch 1,
**dadurch gekennzeichnet, daß** die Vorrichtung mit einem Tieridentifikationssystem (22) versehen ist.

3. Vorrichtung nach Anspruch 1 oder 2,
**dadurch gekennzeichnet, daß** die Vorrichtung mit einer Zentraleinheit (20) versehen ist, die einen Computer mit einem Speicher zum Verarbeiten von Meßdaten umfaßt, die von der Belastungsmeßvorrichtung (6 bis 19) gemessen wurden.

4. Vorrichtung nach Anspruch 3,
**dadurch gekennzeichnet, daß** die Zentraleinheit (20) mit einer Lesevorrichtung zum Lesen der Belastungsmeßvorrichtung versehen ist.

5. Vorrichtung nach Anspruch 3 oder 4,
**dadurch gekennzeichnet, daß** die Zentraleinheit (20) eine Korrespondenztabelle umfaßt, wobei die Korrespondenztabelle für jedes Tier belastungsbezogene Daten enthält, wie z. B. Grenzwerte, historische Daten und Toleranzbereiche.

6. Vorrichtung nach Anspruch 5,
**dadurch gekennzeichnet, daß** die belastungsbezogenen Daten in der Korrespondenztabelle automatisch aktualisiert werden.

7. Vorrichtung nach Anspruch 6,
**dadurch gekennzeichnet, daß** die Zentraleinheit (20) eine Vergleichsvorrichtung umfaßt, um die Meßdaten mit den Daten in der Korrespondenztabelle zu vergleichen.

8. Vorrichtung nach Anspruch 7,
**dadurch gekennzeichnet, daß** die Vorrichtung mit verschiedenen Belastungsmeßvorrichtungen versehen ist, wobei der Computer einen Algorithmus enthält, um bestimmten Belastungsmeßdaten einen Gewichtungsfaktor zuzuordnen.

9. Vorrichtung nach einem der vorhergehenden Ansprüche 3 bis 8,
**dadurch gekennzeichnet, daß** die Zentraleinheit (20) mit einer Signalausgabevorrichtung versehen ist, die nach Empfang und Verarbeitung der Belastungsmeßdaten das Steuersignal ausgibt.

10. Vorrichtung nach einem der vorhergehenden Ansprüche,
**dadurch gekennzeichnet, daß** die Vorrichtung eine Tür zum Betreten bzw. Verlassen eines Behandlungsbereiches umfaßt, wobei die Tür in verschiedene Positionen einstellbar ist, wobei der Betrieb der Tür durch das Steuersignal gesteuert wird.

11. Vorrichtung nach einem der vorhergehenden Ansprüche,
**dadurch gekennzeichnet, daß** die Vorrichtung eine Beruhigungsvorrichtung umfaßt, wobei die Beruhigungsvorrichtung durch das Steuersignal gesteuert wird.

12. Vorrichtung nach einem der vorhergehenden Ansprüche,
**dadurch gekennzeichnet, daß** die Belastungsmeßvorrichtung mindestens eine Meßvorrichtung aus der Gruppe umfaßt, die besteht aus: einem Infrarotmeßgerät (6) zum Messen eines Infrarotbildes des Tieres; einer Kamera, insbesondere einer Videokamera (7), um die Position der Ohren und/oder des Kopfes und/oder des Schwanzes des Tieres zu ermitteln; einem Feuchtigkeitsmesser (8) zum Ermitteln der Feuchtigkeit des Felles bzw. der Nase des Tieres; einem Bewegungsverhaltens-Meßgerät, wie z. B. einer Videokamera (9), einem Schrittzähler (10), um das Bewegungsverhalten, insbesondere die Bewegungsaktivität, des Tieres zu ermitteln; einem Augenmeßgerät (11), wie z. B. einer Videokamera oder einem Scanner, um die Augencharakteristika des Tieres zu ermitteln; einem Geruchsmeßgerät oder Odormeßgerät (12), um den Atem- oder Körpergeruch des Tieres zu ermitteln; einer Muskelspannungs-Meßvorrichtung (13), wie z. B. einem Muskelkontraktions-Meßgerät oder einer Videokamera, um die Muskelspannung des Tieres zu ermitteln; einer Videokamera (14), um zu ermitteln, ob das Tier seine Zunge aus dem Maul hängen läßt; einem Blutanalysator (15), um die Konzentration von Blutbestandteilen, wie z. B. Sauerstoff, Hormone und Blutzellen, des Tieres zu ermitteln; einer Ausscheidungs-Analysiervorrichtung (16), um die Charakteristika der Ausscheidung des Tieres zu ermitteln; einem Herzschlagmeßgerät (17) zum Ermitteln des Herzschlages des Tieres; einem Thermometer (18) zur Ermittlung der Temperatur des Tieres; einem Muskelvibrations-Meßgerät (19) zum Ermitteln der Muskelvibrationen des Tieres.

13. Vorrichtung nach einem der vorhergehenden Ansprüche,
**dadurch gekennzeichnet, daß** die Belastungsmeßvorrichtung (6 bis 19) mit einem Pufferspeicher zur Aufnahme einer Anzahl von Meßdaten versehen ist.

14. Vorrichtung nach einem der vorhergehenden Ansprüche,
**dadurch gekennzeichnet, daß** die Belastungsmeßvorrichtung (6 bis 19) mit einem Sender zum Senden von Daten versehen ist.

15. Vorrichtung nach Anspruch 14,
**dadurch gekennzeichnet, daß** die Belastungsmeßvorrichtung (6 bis 19) mit einem Empfänger zum Empfangen einer Befehlsübermittlung versehen ist.

## Revendications

1. Dispositif pour réaliser un traitement sur un animal laitier, en particulier une vache (2), ledit dispositif comprenant un robot de traite (3) avec des gobelets trayeurs (4) qui peuvent être reliés automatiquement aux trayons de la vache (2) à l'aide du robot de traite (3), ledit dispositif étant approprié pour réaliser le traitement dans divers modes, ledit dispositif étant pourvu d'un dispositif de mesure de stress (6 à 19) pour déterminer le degré de stress de l'animal (2) et pour émettre un signal de commande avec une valeur dépendant du stress mesuré, ledit mode du traitement étant sélectionné à l'aide du signal de commande, **caractérisé en ce que** ledit robot de traite (3) est approprié pour réaliser la liaison des gobelets trayeurs (4) aux trayons de la vache (2) dans divers modes, et **en ce que** ce mode du traitement est sélectionné à l'aide du signal de commande.

2. Dispositif selon la revendication 1, **caractérisé en ce que** le dispositif est pourvu d'un système d'identification d'animal (22).

3. Dispositif selon la revendication 1 ou 2, **caractérisé en ce que** le dispositif est pourvu d'une unité centrale (20) comprenant un ordinateur ayant une mémoire pour traiter des données de mesure mesurées par le dispositif de mesure de stress (6 à 19).

4. Dispositif selon la revendication 3, **caractérisé en ce que** l'unité centrale (20) est pourvue d'un dispositif de lecture pour lire le dispositif de mesure de stress.

5. Dispositif selon la revendication 3 ou 4, **caractérisé en ce que** l'unité centrale (20) comprend une table de correspondance, ladite table de correspondance contenant des données relatives au stress pour chaque animal, telles que des valeurs limites, des données historiques et des plages de tolérance.

6. Dispositif selon la revendication 5, **caractérisé en ce que** les données relatives au stress dans la table de correspondance sont mises à jour automatiquement.

7. Dispositif selon la revendication 6, **caractérisé en ce que** l'unité centrale (20) comprend un dispositif de comparaison pour comparer les données de mesure aux données dans la table de correspondance.

8. Dispositif selon la revendication 7, **caractérisé en ce que** le dispositif est pourvu de divers dispositifs de mesure de stress, l'ordinateur contenant un algorithme pour attribuer un facteur de poids à une donnée de mesure de stress particulière.

9. Dispositif selon l'une quelconque des revendications précédentes 3 à 8, **caractérisé en ce que** l'unité centrale (20) est pourvue d'un dispositif émetteur de signal pour émettre le signal de commande après la réception et le traitement de la donnée de mesure de stress.

10. Dispositif selon l'une quelconque des revendications précédentes, **caractérisé en ce que** le dispositif comprend une porte pour l'entrée à, et respectivement la sortie d'une zone de traitement, ladite porte étant adaptée pour être mise dans diverses positions, le fonctionnement de la porte étant commandé par le signal de commande.

11. Dispositif selon l'une quelconque des revendications précédentes, **caractérisé en ce que** le dispositif comprend un dispositif calmant, ledit dispositif calmant étant commandé par le signal de commande.

12. Dispositif selon l'une quelconque des revendications précédentes, **caractérisé en ce que** le dispositif de mesure de stress comprend au moins un dispositif de mesure sélectionné parmi le groupe constitué de : un dispositif de mesure infrarouge (6) pour mesurer une image infrarouge de l'animal ; une caméra, en particulier une camera vidéo (7), pour déterminer la position des oreilles et/ou de la tête et/ou de la queue de l'animal ; un hygromètre (8) pour déterminer l'humidité de la fourrure et respectivement du nez de l'animal ; un dispositif de mesure de comportement de mouvement, tel qu'une caméra vidéo (9), un compteur de pas (10), pour déterminer le comportement de mouvement, en particulier l'activité de mouvement, de l'animal ; un dispositif de mesure d'oeil (11), tel qu'une caméra vidéo ou un scanneur, pour déterminer les caractéristiques de l'oeil de l'animal ; un dispositif de mesure d'odeur (12) pour déterminer l'odeur de l'haleine ou l'odeur corporelle de l'animal ; un dispositif de mesure de tension musculaire (13), tel qu'un dispositif de mesure de contraction musculaire ou caméra vidéo, pour déterminer la tension musculaire de l'animal ; une caméra vidéo (14) pour déterminer si l'animal a sa langue à l'extérieur de sa bouche ; un analyseur de sang (15) pour déterminer la concentration de composants sanguins, tels que l'oxygène, les hormones, les cellules sanguines, de l'animal ; un dispositif d'analyse d'excrément (16) pour déterminer les caractéristiques de l'excrément de l'animal ; un dispositif de mesure de battement de coeur (17) pour déterminer le battement du coeur de l'animal ; un thermomètre (18) pour déterminer la température de l'animal ; un dispositif de mesure de vibration musculaire (19) pour déterminer les vibrations musculaires de l'animal.

13. Dispositif selon l'une quelconque des revendications précédentes, **caractérisé en ce que** le dispositif de mesure de stress (6 à 19) est pourvu d'une mémoire tampon pour contenir un nombre de données de mesure.

14. Dispositif selon l'une quelconque des revendications précédentes, **caractérisé en ce que** le dispositif de mesure de stress (6 à 19) est pourvu d'un transmetteur pour transmettre des données.

15. Dispositif selon la revendication 14, **caractérisé en ce que** le dispositif de mesure de stress (6 à 19) est pourvu d'un récepteur pour recevoir un ordre de transmission.
